# EUROPEAN PATENT APPLICATION

(11) **EP 1 927 642 A2**
(43) Date of publication of application: **04.06.2008**
(21) Application number: 07254181.6
(22) Date of filing: 22.10.2007
(51) Int. Cl.: C10G 3/00, C10G 65/12, C10G 45/02, C10G 45/58

(54) **Process to obtain biolubricants and bioparaffins by hydroprocessing mixtures of wax obtained from renewable resources and waxes of mineral origin**

(30) Priority: 30.11.2006 BR PI0605006
(71) Applicant: Petroleo Brasileiro S.A. Petrobras, Rio de Janeiro RJ (BR)
(72) Inventor: Fontes, Anita Eleonora Ferreira, Rio de Janeiro, RJ CEP:22.630-010 (BR); Nogueira, Wsamir Soares, Rio de Janeiro, RJ CEP:21.940-170 (BR); Sanitago, Fernando Antonio Duarte, Niteroi, RJ CEP:24.358-080 (BR); Gomes, Jefferson Roberto, Rio de Janeiro, RJ CEP:22.280-070 (BR)
(74) Representative: Benson, John Everett

(57) **Abstract**

Process for hydroconversion of loads of mixtures of waxes from renewable resources that may be made up of waxes of mineral origin or waxes of animal origin, that may be used in their pure form or mixed in any proportion, that may optionally be combined with loads of hydrocarbons of mineral origin, as is the case of waxes obtained from petroleum, by industrial treatment. This mixture flow is submitted to a hydrotreatment and hydroisomerization/hydrofinishing process and the referenced process takes place under the usual hydroconversion conditions, in the presence of a hydrogen stream and hydroconversion catalysts, resulting in obtaining products referred to as biolubricants and bioparaffins, that present characteristics of being biodegradable and environmental less pollutant.

## Description

### CROSS REFERENCE TO RELATED APPLICATION

This application is based upon, claims the benefit of, priority of, and incorporates by reference, the contents of Brazilian Patent Application No. PI PI 0605006-9 filed November 30, 2006.

### FIELD OF THE INVENTION

This invention belongs in the field of hydroconversion processing, more specifically to the hydroconversion of wax mixture loads obtained from renewable resources such as waxes of vegetable or animal origin, combined or not with waxes of mineral origin, such as waxes obtained from petroleum, to obtain products with biodegradable characteristics, that may be called biolubricant oils and bioparaffins.

### BACKGROUND OF THE INVENTION

Growing concerns about the environment and the ever more restrictive regulations to control environmental pollution have caused researchers to search for innovative and economically viable alternative raw materials to use in the industrial and energy production context, for the purpose of obtaining raw materials to generate products that pollute less ant and that have biodegradable characteristics in comparison to those obtained from currently employed industrial technologies, and this search for alternatives has opened many routes of research in which the use of raw materials from renewable resources has been of particular interest.

In Brazil, due to its large expanse of territory, agriculture is a factor of great importance in promoting its socio-economic development, and in this way, for the purpose of improving environmental conditions worldwide that have been greatly affected by the economic activities of modern civilization, renewable resources are being used more and more.

In this context, agricultural raw materials have been the object of rising interest, in as far as the exploration of new ways to use them, or as an insertion with other traditional raw materials, make them economically attractive, once besides contributing to the improvement of the environment, they may become an extra source for supplies for some Brazilian regions.

Thus, there is a great effort in Brazil to make the use of vegetable raw materials viable in the prevailing energy situation as currently practiced in the country, which in many cases besides be economically more favorable, produce significant advantages for the environment by producing products that are environmentally less aggressive and less polluting, which has required the development of new technologies, such as for example, as referenced as the use of products of vegetable origin, which make up the so-called "synthetic vegetable based" products, for application in the industrial sector, such as for example, in the preparation of lubricant oils.

Research and the use of lubricants prepared from vegetable oils have greatly advanced in the last years, notably caused by the enforcement of strict environmental legislation in various parts of the world, that, thus, stimulate a broader use of renewable energy resources.

However, development of this technology has still not advanced much and this invention offers an innovative alternative for this purpose.

### Related Technique

The adoption of hydrorefinery technology in the production of basic lubricating oils will allow a higher quality level to be attained, in respect of the requirements of the performance and cost demands in automotive motors as well as compliance with environmental restrictions.

Among hydrorefining process for the existing basic oils, hydroisodewaxing catalytic processing have been used to great advantage, since by substituting conventional deparaffination, it becomes a very flexible and effective alternative. Instead of physically separating paraffin crystals, the paraffin molecules are transformed into isoparaffins with low fluidity point, which contributes to increase performance in lubricants.

Research on hydroisomerization and paraffin hydrocracking show possibilities in obtaining basic oils of high quality.

In this way, hydroisomerization of highly paraffinic fractions of petroleum allow obtaining oils with low fluidity point with excellent viscosity characteristics in terms of temperature, in other words, with a high viscosity index.

Also, the evolution of specifications performance for lubricants has encouraged the change from production of basic oils to others that do not produce paraffins. As a result, there is a tendency to reduce the production of paraffin, and in this way, paraffin has become a high value product and is considered critical for profitability of industrial units that produce oil from Group I. The reduction in supply has allowed synthetic and natural paraffins to enter into the market.

Thus, as has been observed in Brazil, there is an increase of industrial and government interest in several parts of the world of turning to formulations of lubricants with technical characteristics that surpass those of mineral origin and that significantly reduce costs. Notably, the European Community has been supporting a growing number of projects that propose research activities as well as disseminating knowledge in this field.

As stated, it is noted that the need for the development of new technologies that use raw materials and that will result in the production of products that meet the needs of the ever increasingly strict requirements of environmental regulations, that come from renewable sources, and that have biodegradable characteristics.

### SUMMARY OF THE INVENTION

In the process of this invention, high quality oil, such as oils from Group II and Group III, is produced using hydrotreatment under moderate temperature and pressure conditions. More specifically, this invention refers to a hydrotreatment/hydroisomerization process which leads to obtaining a lubricant oil with high viscosity index and low fluidity point, through contact with a load containing a mixture made up of waxes obtained from a renewable source, such as a wax of vegetable origin, herein after referred to as a vegetal wax, or a wax of animal origin, or even a mixture of both, together with a load of wax or mineral origin, herein after referred to as a mineral wax, such as of petroleum origin, in a catalytic bed made up of a hydrotreatment (HDT) catalyst, a hydroisodewaxing catalyst (HIDW), and a hydrofinishing catalyst (HDF).

By using the process presented by this invention, it is also possible to obtain a paraffin that complies with FDA (Food and Drug Administration) regulations, using only the hydrotreatment stage, which is the first stage of this process.

This study resulted in the development of an innovative process for hydrotreating and hydroisodewaxing of vegetal waxes or waxes of animal origin, or even a mixture of both, together with a load of mineral wax, in which hydrocracking reactions are used to reduce the number of carbon atoms in the chain, hydrotreatment for removing oxygenated compounds and hydrogenation of unsaturated fats to remove double bonds, that may or may not be followed by isomerization to remove paraffins, and hydrofinishing.

More specifically, this invention includes a process to prepare lubricating oils of high quality, that are biodegradable, the so called biolubricants and bioparaffins that are classified for food grade use ("food grade"), from a load of vegetal wax or wax of animal origin, or a mixture of both, together with a load of mineral waxes, using a mild hydrotreatment, that may be followed by hydroisomerization to remove paraffins in the case of producing biolubricants, and followed by hydrofinishing using a hydrogenation catalyst.

In this way, this invention provides a hydrotreating process of vegetal waxes or waxes of animal origin, or of a mixture of both, together with a load of mineral wax, that may be followed by hydroisodewaxing/hydrofinishing, in which a flow made up of a mixture constituted of waxes obtained from renewable sources and treated together with mineral waxes.

In the context of this invention, waxes from renewable sources are to be understood as those coming from vegetal waxes or waxes of animal origin, or even in a mixture of both in any proportion, and mineral waxes are understood to be those coming from hydrocarbon sources of mineral origin, such as those obtained from petroleum.

In this process, a mixture made up of 1% to 100% wt/wt of waxes obtained from renewable sources and 99% to 0% wt/wt of mineral wax, is hydrotreated and hydroisodewaxed under hydrotreatment conditions, in order to obtain basic lubricating oil with a high viscosity index and low fluidity point and/or a bioparaffin.

Important examples for use in this process as vegetal waxes are waxes of vegetable origin or obtained from plants, which include esters of fatty acid and fatty alcohols. These waxes have a greater linearity than petroleum paraffins obtained by conventional processing. This characteristic, when combined with greater purity, may provide additional formulation options according to the demand of desired applications.

One of the waxes from plants used in this process is from Carnauba, which is a plant with high economical and social value, low cost and potentially high profitability. Native palm acclimated to the region of northeast of Brazil referenced to as a semi-arid region, is being explored especially on large properties through traditional association with subsistence cultures.

Carnauba wax is obtained from the leaves of a palm known as Copernica Cerifera: The color and quality of the wax obtained is influenced by the age of the leaves and by the refining process. The wax is mainly made up of esters formed by long chain acids and alcohols and small amounts of fatty acid, free alcohols, and resins.

Besides Carnauba, raw materials that are additionally suitable to the application of this invention may be those made from Jojoba, Ouricuri, among others, and may also be from any type of animal source, such as beeswax and whale spermaceti, inasmuch as they satisfy the conditions of use for the process of this invention.

The best Carnauba waxes available on the market contain between 20% and 50% of Carnauba in combination with clarifying agents and natural oils, offering lubrication, good electrical properties and are in conformity with FDA (Food and Drug Administration) regulations. Its melting point is within a range of 83°C and 86°C. Its principal application is in additives to increase the melting point and reduce plasticity.

### BRIEF DESCRIPTION OF THE DRAWING

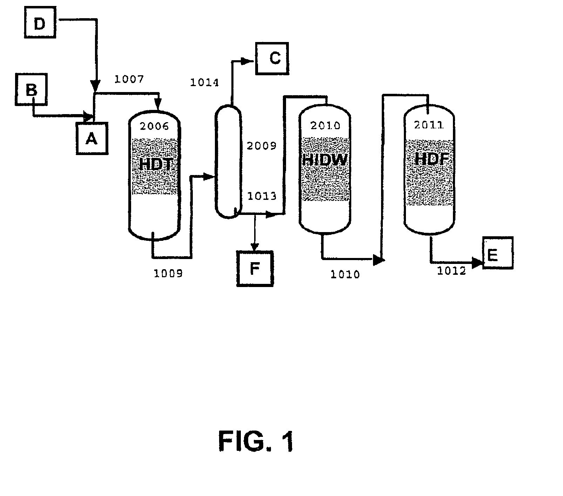

FIGURE 1 is a simplified flow chart of the process of the invention.

### DETAILED DESCRIPTION OF THE INVENTION

A characteristic of this invention refers to the nature of the paraffin load used which is from waxes obtained from renewable sources, mixed with mineral waxes.

The wax load obtained from a renewable source is submitted to successive treatments over different types of catalysts, each destined to perform a specific function in each stage of the process.

In a broad sense, the process of the invention for hydroconversion of a mixture of loads of waxes from renewable sources treated together with a load of mineral waxes includes the following procedures and operational conditions:
a) hydrotreatment of a stream made up of a mixture in a proportion in mass of waxes obtained from renewable sources of between 1% and 100% and mineral waxes of between 99% and 0% wt/wt. This stream is hydrotreated in a hydrotreatment reactor, under the usual conditions of hydrotreatment which involve an operating pressure within a range of between 7 MPa and 15 MPa, temperature of catalytic bed is between 250°C to 350°C, preferably around 300°C, space velocity in the range of between 0.3h⁻¹ and 2h⁻¹, and an NiMo or CoMo catalyst, the hydrogen ratio load within the range of 200 NL of hydrogen/L per load to 1000 NL of hydrogen/L per load, with exothermal reactions, which causes an increase in the temperature throughout the catalytic bed, which produces a product with a boiling point in the range of gas oil with an elevated level of normal paraffins. This paraffin has a melting point higher than 36 °C, viscosity higher than 2 cSt @100°C and an elevated level of saturated fats, and complies with FDA (Food and Drug Administration) regulations. The yield obtained through this process is around 70% to 98% per processed load, with good quality and good results in relation to the service life of the catalyst. As byproducts we obtained: C₁ to C₅ gas, carbon dioxide, and water;
b) to place the resulting paraffin of the hydrotreatment of wax obtained from renewable sources into a hydroisodewaxing reactor and in contact with a catalyst, to promote isomerization of paraffins in order to produce a basic oil with a fluidity point lower than -3°C. The hydroisodewaxing conditions involves an operating pressure of between 7 MPa to 15 MPa, temperature of catalystic bed of between 250°C and 400°C, space velocity in the range of 0.4h⁻¹ to 1.5h⁻¹, with a hydrogen load ratio in the range of 300 NL of hydrogen/L per load to 500 NL of hydrogen/L per load. The yield obtained through this process is around 70% to 98% per processed load, with good quality and good results in relation to the service life of the catalyst. The hydroisodewaxing effluent is an oil with a fluidity point <-3°C and with a viscosity at 100°C>2 cSt;
c) to place the hydroisodewaxing oil in a hydrofinishing reactor in contact with the hydrogenation catalyst to perform the hydrofinishing stage in order to confer greater stability to the product and produce a basic lubricant oil with an elevated viscosity index. The conditions of hydrofinishing involve an operating pressure within a range of 7 MPa to 15 MPa, temperature of catalytic bed between 200 °C and 300°C, preferably around 250°C, NiMo or CoMo catalyst, space velocity in the range of 0.3h⁻¹ and 1.5h⁻¹, with a hydrogen load ratio in the range of 200 NL of hydrogen/L per load to 500 NL of hydrogen/L per load. The yield obtained through this process is around 80% to -99% per processed load, with good quality and good results in relation to the service life of the catalyst.

The operational process of the invention will be described below by referencing the annexed Figure 1.

In the simplified flow chart presented in Figure 1, the stream of wax from renewable resources (A) and the mineral wax stream (B) are mixed producing a stream that is mixed with a recycled gas (D) that is rich in hydrogen, forming the stream (1007). The stream (1007) is heated and exits at a temperature suitable to enter in the hydrotreatment reactor (2006) where the exothermal reactions of the hydrotreatment (HDT) occur, making an increase in temperature along the catalytic bed. The product that leaves the reactor (2006) in the stream (1009), is at a temperature higher than the temperature of entry, and is sent to the fractionating tower (2009) from where leaves the stream (1014) containing light products and also contains a stream of water produced by the process which is sent to the acid water system of the refinery (C) for treatment, and the stream (1013) where the specified paraffin is recovered, called bioparaffins, in (F).

The bioparaffin obtained at the end of this process in (F) possesses excellent use characteristics, and is called non-conventional paraffin, and is able to be in compliance with the FDA (Food and Drug Administration) regulations.

Furthermore, hydroconversion of waxes from renewable sources mixed with mineral waxes within ranges used in operational conditions is also associated with cases in which the low availability of mineral paraffin prevents the full answer of production demands and of the market demands.

In reference to the simplified flow charge in Figure 1, the sequence also represents a variant of the process described above, in which the outlet product of the reactor (2009), that is the stream (1013), goes in part or in full to a second reactor (2010) where it contacts a second catalytic bed comprised of a hydroisodewaxing (HIDW) catalyst which produces a stream (1010) that enters in the reactor (2011) containing a hydrofinishing (HDF) catalyst. The stream (1012) that exits the reactor (2011), containing the product obtained from hydroprocessing of the mixture of wax obtained from renewable sources with mineral waxes is separated. The basic lubricating oil is recovered in (E).

The basic oil obtained at the end of this process answers the growing interest in obtaining formulations of basic lubricants with technical characteristics which surpass mineral origin lubricants and that reduce costs significantly, even to obtain a 360°C cutting (by cracking), that may be incorporated into diesel to improve its quality, due to the elevated cetane number in said basic oil obtained.

Although this invention has been presented and described in reference to a preferred implementation, and the specification described be considered sufficient to enable those well acquainted with the technology to be able to see that variants and modifications may be made to the present invention, without distracting from its spirit and scope, which are defined by the following claims.

In this way, loads of vegetal waxes or waxes of animal origin, or a mixture of both, that for the purpose of this invention is made up of waxes from renewable sources which have been mentioned above, as well as other natural renewable sources that are functionally equivalent and fulfill the fundamental requirements of usage in this process, are considered to be covered by the scope of this invention and are considered to be part and parcel of the spirit and scope of this invention.

## Claims

1. A process for the production of a lubricant oil, which process comprises:
a) providing vegetal wax, wax of animal origin, or a mixture of both in any proportion;
b) optionally providing mineral wax;
c) performing hydroconversion of a mixture of the wax of step (a) and, if any, of step (b);
d) recovering the resulting flow of paraffin product;
e) performing hydroisodewaxing of said paraffin product;
f) performing hydrofinishing of the resulting hydroisodewaxing oil; and
g) recovering a flow of the resulting lubricant oil.

2. The process according to claim 1, wherein wax of step a) is used in a proportion by weight of from 1% to 100% in relation to the wax of step b).

3. The process according to claim 1 or 2, wherein the paraffin product recovered in step (d) has a melting point of from 36°C to 80°C and preferably complies with FDA (Food and Drug Administration) regulations.

4. The process according to any one of the preceding claims, wherein the hydroisodewaxing oil resulting from step (e) has a fluidity point of less than -3°C, a viscosity at 100°C of greater than 2 cSt and is biodegradable.

5. The process according to any one of the preceding claims, wherein the vegetal wax comprises one or more of Carnauba wax (Copernica Cerifera), Jojoba and Ouricuri/Licuri.

6. The process according to any one of the preceding claims, wherein the wax of animal origin comprises one or more of beeswax and spermaceti of whale.

7. The process according to any one of the preceding claims, which comprises:
i) in step a), pressurising the wax of step a);
ii) in step b), pressurising and heating by heat exchange wax of step b);
iii) in step c) mixing the waxes of steps (a) and (b), if any, to obtain a stream made up of the mixture of the waxes, mixing said mixture with a stream of recycled gas that comprises, and preferably is rich in, hydrogen, wherein rich in hydrogen is defined as a hydrogen content of higher than 70% by weight, heating said stream, and contacting the stream, after said heating, with a catalyst at a pressure of from 7 MPa to 15 MPa, wherein the temperature of the catalytic bed is from 250°C to 400°C, the space velocity is between 0.3h⁻¹ to 2h⁻¹, and the hydrogen load ratio is from 200 NL of hydrogen/L per load to 500 NL of hydrogen/L per load;
iv) in step d), distilling said resulting flow, preferably in a fractionating tower, to remove any light products and water and optionally to subject such light products and water to acid-water treatment;
v) in step e), processing a resulting stream of paraffin product where the hydroisodewaxing reactions take place, in the presence of a catalyst bed, wherein the pressure is from 7 MPa to 15 MPa, the temperature of the catalytic bed is from 250°C to 400°C, the space velocity is from 0.4h⁻¹ to 1.5h⁻¹, the hydrogen load ratio is from 300 NL of hydrogen/L per load to 500 NL of hydrogen/L per load, to produce a stream of hydroisodewaxing oil;
vi) in step f), processing the stream of hydroisodewaxing oil with a hydrogenation catalyst to perform the hydrofinishing stage of the stream, wherein the pressure is from 7 MPa to 15 MPa, the temperature of the catalytic bed is from 250°C to 400°C, the space velocity is from 0.3h⁻¹ to 1.5h⁻¹, and the hydrogen load ratio is from 200 NL of hydrogen/L per load to 500 NL of hydrogen/L per load; and
vii) in step g), separating the stream comprising the product obtained from hydrofinishing and recovering the stream of lubricant oil.

8. A process for producing diesel having elevated cetane number, which process comprises a process for producing a lubricant oil according to any one of the preceding claims and further comprises cracking said lubricant oil, obtaining a cut at 360°C and incorporating said cut into diesel thereby elevating its cetane number.
